# DEMANDE DE BREVET EUROPEEN

(11) **EP 2 367 403 A1**
(43) Date de publication de la demande: **21.09.2011**
(21) Numéro de dépôt: 11154947.3
(22) Date de dépôt: 18.02.2011
(51) Int. Cl.: H05B 41/38, B60Q 1/14, F21V 14/08

(54) **Procédé de commande d'un projecteur de véhicule automobile**

(30) Priorité: 02.03.2010 FR 1000835
(71) Demandeur: Valeo Vision, 93012 Bobigny (FR)
(72) Inventeur: Le Bars, Jean-François, 89275, ELCHINGEN (DE); Grimm, Martin, 61440, OBERURSE (DE)

(57) **Abrégé**

L'invention concerne un procédé de commande d'un projecteur (1) de véhicule automobile, ce projecteur comportant une lampe à décharge (6), notamment au xénon, le procédé comportant les étapes suivantes :
- alimenter sélectivement la lampe à décharge avec une première puissance électrique (P1) de manière à ce que le projecteur produise un éclairage code,
- alimenter sélectivement la lampe à décharge avec une deuxième puissance électrique (P2) de manière à ce que le projecteur produise un éclairage de route,

la deuxième puissance électrique étant plus élevée que la première puissance électrique, notamment plus élevée d'au moins 5% voire 10% voire plus.

## Description

L'invention concerne notamment un procédé de commande d'un projecteur de véhicule automobile.

Dans le domaine de l'éclairage automobile, il existe différents types de dispositifs de projection de lumière parmi lesquels on trouve :
- des feux de position, d'intensité et de portée faible ;
- des feux de croisement, ou codes, d'intensité plus forte et de portée sur la route avoisinant 70 mètres, utilisés essentiellement la nuit et dont la répartition du faisceau lumineux est étudiée pour ne pas éblouir le conducteur d'un véhicule venant en sens inverse;
- des feux de route, avec une longue portée avoisinant les 200 mètres, qui sont utilisés pour éclairer la route au loin et permettre au conducteur d'appréhender la trajectoire du véhicule ;
- des feux anti-brouillard.

Actuellement, il existe des dispositifs de projection de lumière, ou projecteurs, qui assurent à la fois la fonction de code et la fonction route. Ces projecteurs sont appelés projecteurs bi-fonctions ou bi-modes. Ils assurent alternativement un éclairage en mode code et un éclairage en mode route. Un tel projecteur bi-fonction comporte une source lumineuse émettant un éclairage identique quel que soit le mode de fonctionnement (route ou code). Il comporte généralement un cache amovible apte à assurer une coupure du faisceau lumineux. Ce cache est, par exemple, un volet métallique pouvant être dans une première position ou une deuxième position. Dans la première position, le cache n'occulte pas le faisceau lumineux produit par la source lumineuse, ou lampe, du projecteur. Dans la seconde position, le cache occulte partiellement le faisceau lumineux produit par la lampe du projecteur. Dans cette seconde position, on dit que le cache réalise une coupure spécifique du faisceau lumineux, cette coupure spécifique correspond à la coupure du faisceau lumineux nécessaire pour obtenir la fonction code. Ainsi, l'éclairage en mode code ou en mode route se différencie par la présence ou non de la coupure.

Dans la plupart des projecteurs bi-fonctions, le cache amovible est pivotant. Il peut ainsi prendre les deux positions citées précédemment, à savoir :
- la seconde position, appelée position d'occultation, dans laquelle il assure la coupure du faisceau lumineux, générant ainsi la fonction d'éclairage code, et
- la première position, appelée position neutre, dans laquelle le cache n'occulte pas le faisceau lumineux, générant alors la fonction d'éclairage de route, ou fonction route.

Dans les projecteurs bi-fonctions actuels, la source lumineuse peut être une lampe halogène. Cette lampe halogène est généralement alimentée par une tension fixe, qui dépend de la lampe utilisée, du véhicule dans lequel la lampe est montée et/ou du pays dans lequel le véhicule va être vendu. Cette tension fixe est généralement la tension nominale de la lampe. En effet, une tension nominale est spécifiée, par les fabricants de lampes, pour chaque type de lampe. Cette tension nominale est la tension d'alimentation pour laquelle le fonctionnement de la lampe est optimal.

On connaît par la demande de brevet EP 2 093 104 un procédé d'alimentation d'une lampe halogène suivant des tensions différentes.

La présente invention concerne un type de source lumineuse différent, à savoir les lampes à décharge.

Une lampe à décharge comporte deux électrodes et un mélange gazeux qui, en présence d'un arc électrique entre les deux électrodes, génère de la lumière.

Ce mélange gazeux contient par exemple du xénon.

La réglementation impose que, dans le cas d'utilisation d'une source lumineuse de flux supérieur à 2000 lumens, dans un projecteur pour la fonction code, le véhicule soit équipé d'un dispositif lave- projecteur et d'un dispositif de réglage d'assiette du projecteur, pour éviter les éblouissements des conducteurs adverses du fait respectivement de la diffusion de la lumière par la salissure sur la glace externe du projecteur et des mouvements de la caisse du véhicule lors des phases d'accélération et de freinage.

Cette réglementation ne concerne pas les faisceaux de route dans la mesure où ceux-ci sont réglementairement utilisés hors de la présence de conducteurs adverses.

Ces dispositifs supplémentaires relativement coûteux ont un impact sur le prix global au niveau du véhicule de l'option dite « Xenon », ce qui en freine le développement.

Il existe également un besoin pressant de réduire les rejets CO2 des véhicules, et dans la mesure où la consommation électrique des véhicules est directement liée aux rejets de CO2, les constructeurs automobiles recherchent activement des solutions basses consommation électrique, alternatives aux lampes à filament de type halogène qui consomment environ 120 Watts pour assurer la fonction code.

Pour faire face à ces contraintes, les fabricants de lampes proposent d'utiliser une lampe à décharge de type D5S, D6S ou D7S, de puissance inférieure ou égale au seuil des 2000 lumens de la réglementation.

L'inconvénient est alors que la performance de l'éclairage de route est dégradée.

Il est également connu d'améliorer le confort du conducteur en vision de nuit, en adaptant selon les besoins la portée et/ou l'intensité des faisceaux de croisement ou des faisceaux de route pour optimiser l'éclairage potentiel de la voie de circulation. Par exemple, il a été proposé une fonction dite faisceau d'autoroute (*Motorway Light* en anglais) et une fonction dite faisceau de ville (*Town Light* en anglais). Ces fonctions consistent à modifier la portée et/ou l'intensité lumineuse courante des faisceaux de croisement, selon la voie de circulation empruntée par le véhicule et/ou selon les conditions d'éclairage de l'environnement extérieur du véhicule. Plus particulièrement, lorsqu'un véhicule circule sur une voie à circulation rapide, telle qu'une autoroute ou voie de circulation analogue, il est opportun d'accroître la portée des faisceaux de croisement, pour faire porter efficacement au plus loin le faisceau lumineux émis (fonction faisceau d'autoroute). A contrario, il est opportun de diminuer légèrement la portée et d'élargir les faisceaux émis par les faisceaux de croisement lorsque le véhicule circule à proximité en environnement extérieurement éclairé, tel qu'en milieu urbain par exemple (fonction faisceau de ville). On pourra par exemple se reporter au brevet EP 1 923 262, qui expose des modalités permettant d'adapter la portée d'un faisceau émis par un faisceau code. On parle de fonction ADB (*Adaptive Driving Beam* en anglais).

La présente invention vise notamment à proposer un projecteur qui réponde à des exigences qui apparaissent peu conciliables, à savoir un projecteur qui puisse être dépourvu de dispositifs supplémentaires tels qu'un dispositif lave- projecteur ou de réglage de la hauteur du faisceau, tout en permettant d'améliorer les performances lumineuses de ce projecteur, notamment en mode route.

L'invention a ainsi pour objet un procédé de commande d'un projecteur de véhicule automobile, ce projecteur comportant une lampe à décharge, notamment au xénon, le procédé comportant les étapes suivantes :
- alimenter sélectivement la lampe à décharge avec une première puissance électrique de manière à ce que le projecteur produise un éclairage d'un premier type, notamment un éclairage code,
- alimenter sélectivement la lampe à décharge avec une deuxième puissance électrique de manière à ce que le projecteur produise un éclairage d'un deuxième type, notamment un éclairage de route ou, en variante, un éclairage ADB ou un éclairage modulable automatiquement en fonction de la scène routière, ou un éclairage autoroute, ou un éclairage à portée progressive,
la deuxième puissance électrique étant plus élevée que la première puissance électrique, notamment plus élevée d'au moins 5% voire 10% voire plus.

L'invention offre une solution relativement simple à des exigences différentes, mentionnées ci-dessus.

Alors que la pratique habituelle dans le domaine de l'éclairage automobile consiste à utiliser, en liaison avec les lampes à décharge, une puissance constante, l'invention quant à elle préconise de '*booster*' la puissance électrique lors de l'éclairage de route pour améliorer les performances pour cet éclairage de route.

En éclairage code, selon l'invention, la puissance d'alimentation de la lampe à décharge est choisie de manière à rester conforme à la réglementation, à savoir l'éclairage code est de préférence égal ou inférieur au seuil de 2000 lumens.

Dans un exemple de mise en oeuvre de l'invention, la première puissance électrique est sensiblement égale à 25 Watts.

Avantageusement la deuxième puissance est sensiblement comprise entre 27.5 et 35 Watts.

De préférence, la lampe à décharge est alimentée électriquement par un ballast.

Dans un exemple de mise en oeuvre de l'invention, la tension d'alimentation électrique de la lampe à décharge est la même en éclairage code et en éclairage de route, cette tension étant par exemple sensiblement égale à 45 Volts.

L'invention a également pour objet un projecteur de véhicule automobile, comportant une lampe à décharge, le projecteur étant capable de produire de manière sélective un éclairage d'un premier type, notamment code, et un éclairage d'un deuxième type, notamment de route, caractérisé par le fait que le projecteur comporte en outre un ballast capable d'alimenter électriquement, de manière sélective, la lampe à décharge avec des première et deuxième puissances électriques, la première puissance électrique étant associée à l'éclairage de premier type, notamment code, et la deuxième puissance électrique étant associée à l'éclairage de deuxième type, notamment de route.

Le projecteur est de préférence dépourvu de dispositif lave- projecteur et/ou de dispositif de réglage d'assiette du projecteur.

Le projecteur comporte avantageusement un cache mobile agencé pour générer une coupure pour l'éclairage code.

Le ballast peut être agencé pour pouvoir être commandé par un signal choisi parmi : un signal PWM, un signal en tension, un signal sous protocole LIN ou CAN.

Avantageusement ce ballast comporte une entrée dite « *ballast boost* » sur laquelle est appliquée la même commande que celle qui permet à un dispositif optomécanique du module optique de basculer du premier mode d'éclairage, notamment code, au deuxième mode d'éclairage, notamment de route.

Une telle combinaison des commandes présente l'avantage d'assurer la sûreté de fonctionnement du projecteur complet, à savoir qu'en cas d'absence du signal de commande « *boost* », le ballast alimente la lampe à sa puissance nominale pour fournir un flux égal ou inférieur à la limite réglementaire de 2000 lumens alors que le dispositif optomécanique est maintenu dans une position stable qui correspond à l'éclairage de type « code », par exemple par l'intermédiaire d'un dispositif utilisant un simple ressort de rappel.

Avantageusement, tant pour des raisons de réduction de la puissance électrique consommée, donc de CO2, que pour des raisons d'adaptation de l'éclairage aux conditions environnantes (éclairage ville, mauvais temps,...), le ballast peut être également piloté par son/ses entrée(s) de commande de manière à ce que la lampe émette une puissance lumineuse inférieure à son flux nominal.

Si on le souhaite, le ballast est logé dans un compartiment solidaire de la lampe à décharge.

La tension d'alimentation de la lampe peut être à une valeur proche ou égale à une tension nominale de la lampe.

Le projecteur peut être associé à un module optique mobile en rotation afin d'assurer des fonctions d'éclairage autres que le code et le route, à savoir notamment l'éclairage autoroute, ville, mauvais temps, éventuellement ainsi que les fonctions dites d'éclairage progressif et/ou de route partiel, par exemple associées à un dispositif de localisation de véhicule adverse telle qu'une caméra embarquée dans le véhicule.

L'invention pourra être mieux comprise à la lecture de la description détaillée qui va suivre, d'exemples de mise en oeuvre non limitatifs de l'invention, et à l'examen du dessin annexé, sur lequel :
- la figure 1 illustre, schématiquement et partiellement, un projecteur selon un exemple de mise en oeuvre de l'invention,
- la figure 2 représente, schématiquement et partiellement, un ballast du projecteur de la figure 1, et
- les figures 3 et 4 illustrent d'autres exemples de réalisation de l'invention.

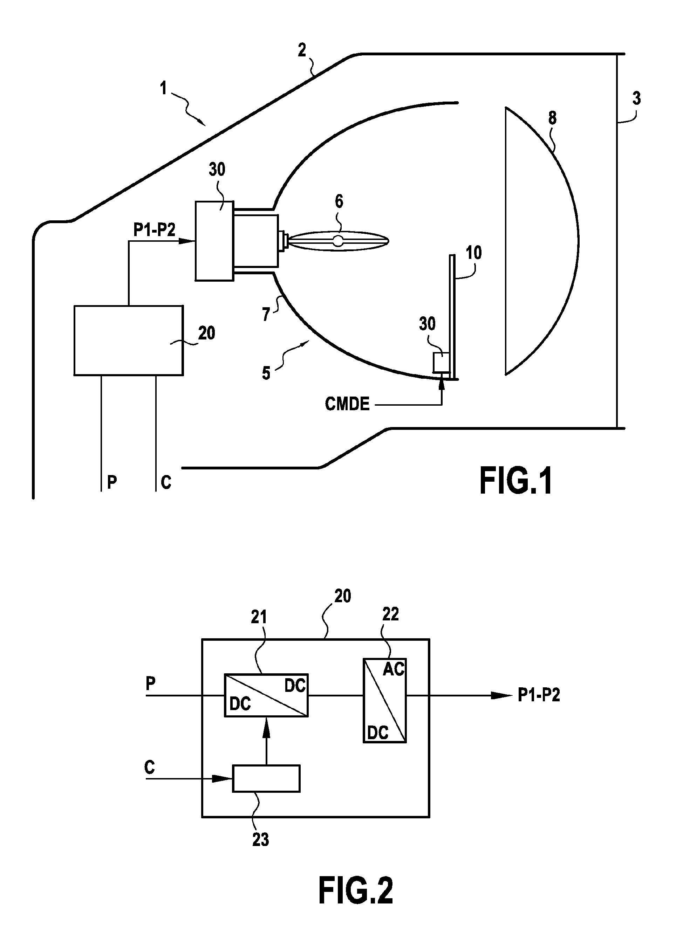

On a représenté sur la figure 1 un projecteur 1 de véhicule automobile, selon un exemple de mise en oeuvre de l'invention.

Ce projecteur 1 comporte un boîtier 2 fermé, à l'avant, par une glace de protection 3.

Le projecteur 1 comporte, à l'intérieur du boîtier 2, un module d'éclairage 5, par exemple un module de projection de type elliptique.

Le module d'éclairage 5 comporte une source lumineuse 6 et un réflecteur 7 de type elliptique associé, agencé pour réfléchir la lumière provenant de la source 6 vers l'avant.

La source 6 est formée par une lampe à décharge, par exemple du type D5S, D6S, D7S.

Le module 5 comprend en outre une lentille 8, à l'avant du réflecteur 7, apte à projeter la lumière provenant de la source 6 et du réflecteur 7.

De manière connue en soi, un cache amovible 10 est prévu derrière la lentille 8 afin de générer une coupure dans le faisceau atteignant la lentille 8 en vue de former un éclairage code.

Le cache mobile est actionné par un dispositif optomécanique 30, par exemple rotatif, comprenant par exemple un électroaimant, un moteur à courant continu, ou encore un moteur pas à pas.

Ce dispositif 30 est par exemple commandé par une commande CMDE.

Le projecteur 1 est agencé pour produire de manière sélective un éclairage code et un éclairage de route, et comporte un ballast 20 capable d'alimenter électriquement, de manière sélective, la lampe à décharge 6 avec des première et deuxième puissances électriques P1 et P2, la première puissance électrique P1 étant associée à l'éclairage code et la deuxième puissance électrique P2 étant associée à l'éclairage de route.

Le projecteur 1 est dépourvu de dispositif lave- projecteur et/ou de dispositif de réglage d'assiette du projecteur.

Le ballast 20 peut être agencé pour pouvoir être commandé par un signal choisi parmi : un signal PWM, un signal en tension, un signal sous protocole LIN ou CAN.

Dans un exemple de mise en oeuvre de l'invention, la première puissance électrique P1 est sensiblement égale à 25 Watts, et la deuxième puissance P2 est sensiblement comprise entre 27.5 et 35 Watts.

Dans l'exemple décrit, le ballast 20 comprend, comme illustré sur la figure 2, un convertisseur DC/DC référencé 21 en série avec un convertisseur AC/DC référencé 22.

Un microcontrôleur 23 est prévu dans le ballast 20 pour commander le convertisseur DC/DC 21, en fonction d'un signal de commande C.

L'information de commande C contient l'information du choix de l'éclairage code ou route.

L'alimentation électrique P en provenance du véhicule est reliée au convertisseur DC/DC 21.

Si on le souhaite, le ballast 20 peut être logé dans un compartiment 30 solidaire de la lampe à décharge, à l'arrière de celle-ci.

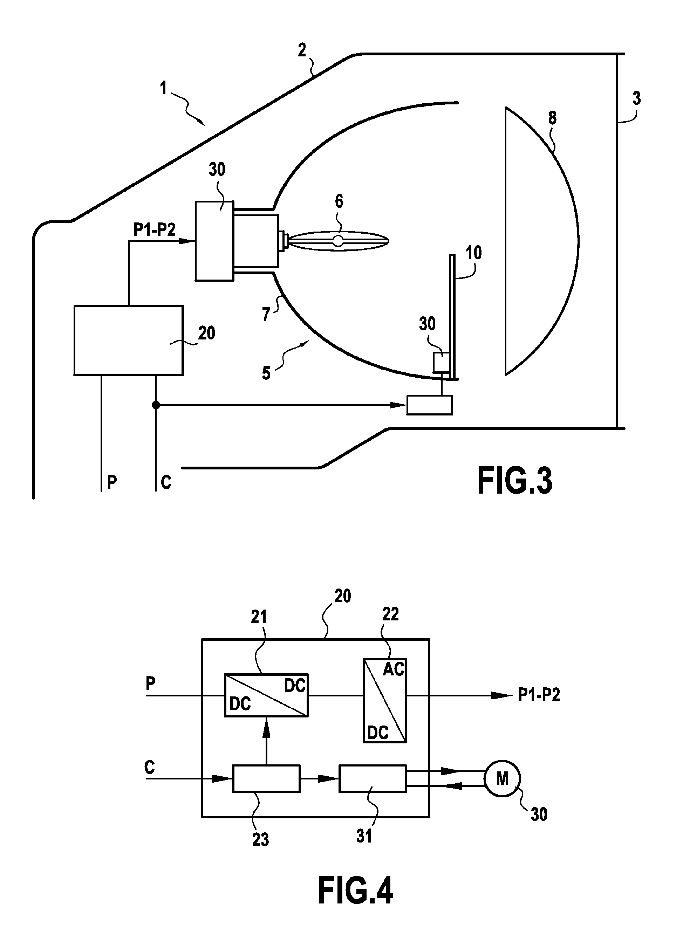

On a représenté sur la figure 3 un autre mode de réalisation, suivant lequel la commande « *boost* » C du ballast 20 est la même que la commande du dispositif optomécanique 30 de basculement des modes code à route, assurant ainsi de fait la sûreté de fonctionnement de l'ensemble.

On a représenté sur la figure 4 un mode de réalisation dans lequel la commande du dispositif optomécanique 30 de basculement du mode code à route est intégrée au ballast 20 lui-même, qui comprend un étage de puissance 31.

## Revendications

1. Procédé de commande d'un projecteur (1) de véhicule automobile, ce projecteur comportant une lampe à décharge (6), notamment au xénon, le procédé comportant les étapes suivantes :
- alimenter sélectivement la lampe à décharge avec une première puissance électrique (P1) de manière à ce que le projecteur produise un éclairage d'un premier type, notamment un éclairage code,
- alimenter sélectivement la lampe à décharge avec une deuxième puissance électrique (P2) de manière à ce que le projecteur produise un éclairage d'un deuxième type, notamment un éclairage de route ou un éclairage ADB,
la deuxième puissance électrique étant plus élevée que la première puissance électrique, notamment plus élevée d'au moins 5% voire 10% voire plus.

2. Procédé selon la revendication précédente, **caractérisé par le fait que** la première puissance électrique (P1) est sensiblement égale à 25 Watts.

3. Procédé selon l'une des revendications précédentes, **caractérisé par le fait que** la deuxième puissance (P2) est sensiblement comprise entre 27.5 et 35 Watts.

4. Procédé selon l'une des revendications précédentes, **caractérisé par le fait que** la lampe à décharge est alimentée électriquement par un ballast.

5. Projecteur (1) de véhicule automobile, comportant une lampe à décharge (6), le projecteur étant capable de produire de manière sélective un éclairage d'un premier type, notamment code, et un éclairage d'un deuxième type, notamment de route, **caractérisé par le fait que** le projecteur comporte en outre un ballast (20) capable d'alimenter électriquement, de manière sélective, la lampe à décharge avec des première et deuxième puissances électriques différentes, la première puissance électrique étant associée à l'éclairage du premier type, la deuxième puissance électrique étant associée à l'éclairage du deuxième type, notamment éclairage de route ou ADB.

6. Projecteur selon la revendication précédente, **caractérisé par le fait que** la commande de la puissance sélective de la lampe appliquée au ballast pour les premier et deuxième modes, notamment code et route, est la même que celle pilotant un dispositif optomécanique (30) de basculement du cache mécanique entre les modes, notamment de la position éclairage code en éclairage route, et de préférence qu'en l'absence de cette commande, le mode code est systématiquement activé tant au niveau puissance de la lampe qu'au niveau répartition lumineuse, assurant ainsi la sûreté fonctionnelle du système.

7. Projecteur selon l'une des deux revendications précédentes, **caractérisé par le fait qu'**une partie électronique de la commande du dispositif optomécanique (30) de basculement des faisceaux, notamment code et route, est intégrée au ballast.

8. Projecteur selon l'une des revendications 5 à 7, **caractérisé par le fait que** la commande de la puissance sélective de la lampe est également utilisée pour réduire la puissance de la lampe en fonction des conditions environnantes au véhicule.

9. Projecteur selon l'une des revendications 5 à 8, **caractérisé par le fait qu'**il est dépourvu de dispositif lave- projecteur et/ou de dispositif de réglage d'assiette du projecteur.

10. Projecteur selon l'une des revendications 5 à 9, **caractérisé par le fait qu'**il est associé à un module optique mobile en rotation afin d'assurer des fonctions d'éclairage autres que le code et le route, à savoir notamment l'éclairage autoroute, ville, mauvais temps, éventuellement ainsi que les fonctions dites d'éclairage progressif et/ou de route partiel, par exemple associées à un dispositif de localisation de véhicule adverse telle qu'une caméra embarquée dans le véhicule.

11. Projecteur selon l'une des revendications 5 à 10, **caractérisé par le fait que** le ballast est agencé pour pouvoir être commandé par au moins un signal choisi parmi : un signal PWM, un signal en tension, un signal LIN ou CAN.

12. Projecteur selon l'une des revendications 5 à 11, **caractérisé par le fait que** le ballast est logé dans un compartiment solidaire de la lampe à décharge.
